# EUROPÄISCHE PATENTSCHRIFT

(11) **EP 3 075 018 B1**
(45) Veröffentlichungstag und Bekanntmachung des Hinweises auf die Patenterteilung: **22.09.2021**
(21) Anmeldenummer: 14789809.2
(22) Anmeldetag: 23.10.2014
(51) Int. Cl.: H01M 4/38, H01M 10/052, H01M 10/056, H01M 50/403, H01M 50/446, H01M 50/463

(54) **ELEKTROCHEMISCHE ZELLE SOWIE VERFAHREN ZUM HERSTELLEN EINER ELEKTROCHEMISCHEN ZELLE**
ELECTROCHEMICAL CELL AND METHOD FOR PRODUCING AN ELECTROCHEMICAL ZELL
CELLULE ÉLECTROCHIMIQUE ET PROCÉDÉ PERMETTANT DE PRODUIRE UNE CELLULE ÉLECTROCHIMIQUE

(30) Priorität: 27.11.2013 DE 102013224302
(43) Veröffentlichungstag der Anmeldung: 05.10.2016
(73) Patentinhaber: Robert Bosch GmbH, 70442 Stuttgart (DE)
(72) Erfinder: SAUTER, Ulrich, 76131 Karlsruhe (DE); WEGNER, Marcus, 71229 Leonberg (DE); THIELEN, Joerg, 70195 Stuttgart (DE); STIASZNY, Barbara, 71229 Leonberg (DE)
(86) Internationale Anmeldenummer: PCT/EP2014/072699
(87) Internationale Veröffentlichungsnummer: WO 2015/078638

(56) Entgegenhaltungen:
- WO-A1-2013/109622
- JP-A- 2008 103 259
- US-A1- 2006 183 011
- US-A1- 2010 233 548
- US-A1- 2012 270 112
- US-A1- 2012 328 958
- US-A1- 2015 010 804
- US-A1- 2015 050 543

## Beschreibung

Die Erfindung betrifft eine elektrochemische Zelle sowie ein Verfahren zum Herstellen einer elektrochemischen Zelle.

### Stand der Technik

Elektrochemische Zellen, insbesondere Lithium-basierte Sekundärbatterien, finden wegen ihrer hohen Energiedichte und hohen Kapazität als Energiespeicher in mobilen Informationseinrichtungen, wie z.B. Mobiltelefonen, in Werkzeugen oder in elektrisch betriebenen Automobilen sowie in Automobilen mit Hybridantrieb Anwendung. Trotz dieser sehr unterschiedlichen Einsatzgebiete von elektrochemischen Zellen müssen alle verwendeten Zellen ähnlich hohe Anforderungen erfüllen: möglichst hohe spezifische Kapazität und spezifische Energiedichte, welche über eine hohe Anzahl an Lade- und Entladezyklen stabil bleibt, bei möglichst geringem Gewicht.

Besonders hohe spezifische Energiedichten für Lithium-basierte Batterien können durch die Verwendung einer Lithium-Metall-Anode erreicht werden. Die Verwendung einer Lithium-Metall-Anode geht allerdings mit nicht unerheblichen Problemen einher. Eine große Herausforderung stellt das ungleichmäßige Abscheiden und Auflösen des Lithiums dar. Dadurch kommt es zur Bildung von Dendriten (erstarrte, nadelförmige Kristalle), was beim Durchdringen des Separators und Kontakt mit der Kathode zum Kurzschluss der Batterie führen kann. Darüber hinaus sind die eingesetzten Elektrolyte gegenüber Lithium nicht stabil. Infolgedessen findet eine kontinuierliche Zersetzung der Elektrolytkomponenten während des Batteriebetriebs statt.

Die DE 10 2010 054 610 A1 offenbart eine elektrochemische Zelle, aufweisend eine negative Elektrode, eine positive Elektrode, einen Separator, der die positive Elektrode von der negativen Elektrode trennt, sowie einen Elektrolyten, wobei die negative Elektrode metallisches Lithium aufweist und beschichtet ist. Die Beschichtung weist anorganisches, ionenleitfähiges Material auf, welches als Fasern oder Partikel ausgestaltet ist.

In der US2012/270112 A1 ist ein Verbund-Festelektrolyt offenbart, welcher eine Festelektrolytbasiskomponente aufweist, die eine kontinuierliche Matrix eines anorganischen aktiven Metallionenleiters ist, und welche eine Füllstoffkomponente aufweist, die verwendet wird, um durchgehende Porosität im Festelektrolyten zu eliminieren.

In der US 2010/233548 A1 ist ein Verfahren zur Herstellung einer Festkörperbatterie offenbart, bei dem die Pinholes in einem Festelektrolyt zumindest teilweise durch die Abscheidung einer elektrisch isolierenden Schicht gefüllt werden.

Aus der JP 2008103259 ist ein Festelektrolytsubstrat bekannt, wobei der Festelektrolyt eine Vielzahl von Öffnungen aufweist. Weiterhin ist aus der US 2015/0050543 A1 eine elektrochemische Zelle bekannt, welche eine Anode aus Lithium, eine davon getrennte Kathode und einen mikrostrukturierten Separator aufweist, der einen Mehrschichtaufbau aufweist. Darüber hinaus ist aus der US 2015/0010804 A1 eine Mehrzahl von Schutzschichten für Elektroden bekannt, insbesondere für elektrochemische Zellen, die eine Kompositstruktur mit keramischen und polymeren Anteilen umfasst.

### Offenbarung der Erfindung

Die vorliegende Erfindung schafft eine elektrochemische nach Anspruch 1.

Die vorliegende Erfindung schafft des Weiteren ein Verfahren zum Herstellen einer elektrochemischen Zelle nach Anspruch 3.

### Vorteile der Erfindung

Eine Idee der vorliegenden Erfindung ist es, eine verbesserte elektrochemische Zelle sowie ein verbessertes Verfahren zum Herstellen einer elektrochemischen Zelle vorzusehen, welche das Dendritenwachstum auf einer Lithium-Metall-Anode unterbindet und den Kontakt der Lithium-Metall-Anode mit dem Elektrolyten verhindert. Dadurch verbessert sich die Zyklenbeständigkeit einer Anode innerhalb einer Zelle. Dies wird durch Einführen eines Komposits auf die Anode bzw. negative Elektrode und die Anordnung einer Zwischenschicht zwischen dem Komposit und der Kathode erreicht.

Vorteilhafte Ausführungsformen und Weiterbildungen ergeben sich aus den Unteransprüchen sowie aus der Beschreibung unter Bezugnahme auf die Figuren.

Erfindungsgemäß ist vorgesehen, dass der erste Werkstoff durch ein lithiumionenleitendes Material und der zweite Werkstoff durch ein Polymer ausgebildet sind und die Schutzschicht Leitpfade aufweist, welche durch Material-Kanäle des lithiumionenleitenden Materials ausgebildet sind, wobei die Leitpfade in Hochrichtung der Schutzschicht durchgehend ausgebildet sind.

Der durch seinen Aufbau flexible Kompositwerkstoff verhindert das Dendritenwachstum zur positiven Elektrode und erhöht die Zyklenstabilität der Zelle. Aufgrund seiner Ausführung werden die Zahl der Grenzflächen innerhalb der flexiblen Schutzschicht bzw. der negativen Elektrode und der Schutzschicht und dem Elektrolyt auf ein Minimum reduziert und so auch der Innenwiderstand der Zelle, der eng verbunden ist mit den komplexen Übergängen zwischen mehreren Materialien über mehrere Grenzflächen hinweg. Das Vorsehen der Leitpfade in Form von durchgehenden, lithiumionenleitenden Material-Kanälen verbessert die Leitfähigkeit durch die Schutzschicht im Vergleich zu bekannten, durchgängigen, mehrlagigen Schutzschichten.

Ferner is erfindungsgemäß vorgesehen, dass das lithiumionenleitende Material eine gitterförmige Struktur aufweist, mit einer Mehrzahl von zur negativen Elektrode im Wesentlichen senkrecht angeordneten Komponenten und zumindest einer zur negativen Elektrode im Wesentlichen parallel angeordneten Komponente, wobei in dem lithiumionenleitenden Material ausgebildete Zwischenräume mit Polymer gefüllt sind. Das eine gitterförmige Struktur aufweisende lithiumionenleitende Material bildet das Grundgerüst der Schutzschicht. Die Zwischenräume werden mit dem Polymer gefüllt. Dadurch gewinnt der Kompositwerkstoff an Flexibilität und Stabilität gegenüber Volumenänderungen in der Zelle.

Gemäß einer bevorzugten Ausgestaltung ist vorgesehen, dass die Leitpfade jeweils einen rechteckigen oder runden Querschnitt aufweisen. Dadurch kann ein volumenmäßiger Anteil des Polymers und des lithiumionenleitenden Materials spezifiziert werden.

Gemäß einem weiteren bevorzugten Ausführungsbeispiel ist vorgesehen, dass zwischen der negativen Elektrode und dem lithiumionenleitenden Material der Schutzschicht eine Zwischenschicht angeordnet ist. Manche der lithiumionenleitenden Materialien sind im direkten Kontakt mit metallischen Elektroden, wie insbesondere Lithium, nicht stabil. Das Vorsehen einer Zwischenschicht zwischen der negativen Elektrode und dem lithiumionenleitenden Material der Schutzschicht unterdrückt je nach Material die chemische Reaktion mit der Schutzschicht.

Erfindungsgemäß ist vorgesehen, dass der erste Werkstoff durch ein lithiumionenleitendes Material und der zweite Werkstoff durch einen Polymer ausgebildet sind. Vorzugsweise ist vorgesehen, dass das lithiumionenleitende Material durch chemisches Ätzen, Laserablation oder lonenstrahlätzen abgetragen wird. Die Herstellung des lithiumionenleitenden Materials kann somit auf verschiedene Arten erfolgen.

Vorzugsweise ist ferner vorgesehen, dass die in dem ersten Werkstoff ausgebildeten Zwischenräume mit einem Monomer und/oder einer Monomer-Initiator-Mischung und/oder einem Oligomer und/oder einer Oligomer-Initiator-Mischung gefüllt werden die polymerisierfähig sind, oder die Monomere und/oder die Oligomere funktionalisierte Seitengruppen aufweisen, und/oder einem Polymer das in die Zwischenräume eingeschmolzen wird. Das Ausbilden des Polymers kann somit auf verschiedene Arten unter Verwendung verschiedener Bestandteile initiiert werden z.B. durch Hitze bzw. Temperaturänderung oder UV-Bestrahlung.

Gemäß einer weiteren bevorzugten Ausgestaltung ist vorgesehen, dass das lithiumionenleitende Material der Schutzschicht aus sulfidischen, oxidischen oder Phosphat-basierten Gläsern und/oder Keramiken ausgebildet ist. Dies gewährleistet eine bestmögliche Leitfähigkeit durch die Schutzschicht im Vergleich zu bekannten Materialien.

Erfindungsgemäß ist ferner vorgesehen, dass zwischen dem Elektrolyten und der Schutzschicht eine Zwischenschicht (20) angeordnet wird. Vorzugsweise ist ferner vorgesehen, dass zwischen der negativen Elektrode (10) und dem lithiumionenleitenden Material der Schutzschicht (14) eine Zwischenschicht (19) angeordnet wird.

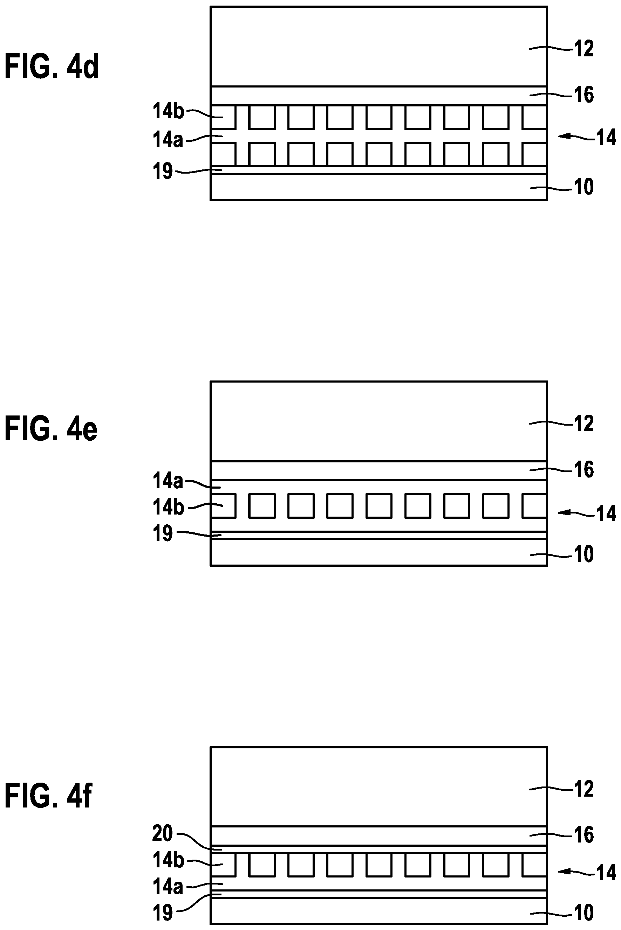

Manche der lithiumionenleitenden Materialien sind im direkten Kontakt mit metallischen Elektroden, wie insbesondere Lithium, nicht stabil. Das Vorsehen einer Zwischenschicht zwischen der negativen Elektrode und dem lithiumionenleitenden Material der Schutzschicht und / oder zwischen der Schutzschicht und dem Elektrolyten verhindert den direkten Kontakt der Schutzschicht mit metallitischem Lithium bzw. Elektrolyt (Fig. 4f). Dadurch wird je nach Material die chemische Reaktion mit der Schutzschicht unterdrückt.

Die Zwischenschicht muss, um die Funktion der Schutzschicht nicht zu beeinträchtigen, selbst gegen Lithium bzw. den Elektrolyten stabil sein und eine ausreichende Lithium-Ionen Leitfähigkeit aufweisen. Die Wahl der Zwischenschicht zwischen Elektrolyt / Schutzschicht bzw. zwischen metallischem Li / Schutzschicht kann daher aufgrund der chemischen Beschaffenheit unterschiedlich sein.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1a: eine Querschnittsansicht einer Schutzschicht der erfindungsgemäßen elektrochemischen Zelle gemäß einer Ausführungsform der Erfindung;
- Fig. 1b eine: Querschnittsansicht einer Schutzschicht der erfindungsgemäßen elektrochemischen Zelle gemäß einer weiteren Ausführungsform der Erfindung;
- Fig. 1c: eine Querschnittsansicht einer Schutzschicht der erfindungsgemäßen elektrochemischen Zelle gemäß einer weiteren Ausführungsform der Erfindung;
- Fig. 2a: eine Draufsicht der Schutzschicht der erfindungsgemäßen elektrochemischen Zelle gemäß einer Ausführungsform der Erfindung;
- Fig. 2b: eine Draufsicht der Schutzschicht der erfindungsgemäßen elektrochemischen Zelle gemäß einer weiteren Ausführungsform der Erfindung;
- Fig. 2c: eine Draufsicht der Schutzschicht der erfindungsgemäßen elektrochemischen Zelle gemäß einer weiteren Ausführungsform der Erfindung;
- Fig. 3a: ein Verfahren zum Herstellen einer elektrochemischen Zelle gemäß einer Ausführungsform der Erfindung;
- Fig. 3b: ein Verfahren zum Herstellen einer elektrochemischen Zelle gemäß einer weiteren Ausführungsform der Erfindung;
- Fig. 3c: ein Verfahren zum Herstellen einer elektrochemischen Zelle gemäß einer weiteren Ausführungsform der Erfindung;
- Fig. 4a: eine schematische Ansicht einer elektrochemischen Zelle, die nicht Teil der in der in den Ansprüchen definierten Erfindung ist;
- Fig. 4b: eine schematische Ansicht einer elektrochemischen Zelle, die nicht Teil der in der in den Ansprüchen definierten Erfindung ist;
- Fig. 4c: eine schematische Ansicht einer elektrochemischen Zelle, die nicht Teil der in der in den Ansprüchen definierten Erfindung ist;
- Fig. 4d: eine schematische Ansicht einer elektrochemischen Zelle, die nicht Teil der in der in den Ansprüchen definierten Erfindung ist;
- Fig. 4e: eine schematische Ansicht einer elektrochemischen Zelle, die nicht Teil der in der in den Ansprüchen definierten Erfindung ist;und
- Fig. 4f: eine schematische Ansicht einer elektrochemischen Zelle gemäß einer Ausführungsform der Erfindung.

In den Figuren der Zeichnung bezeichnen gleiche Bezugszeichen gleiche oder funktionsgleiche Elemente, Bauteile oder Komponenten, soweit nichts Gegenteiliges angegeben ist.

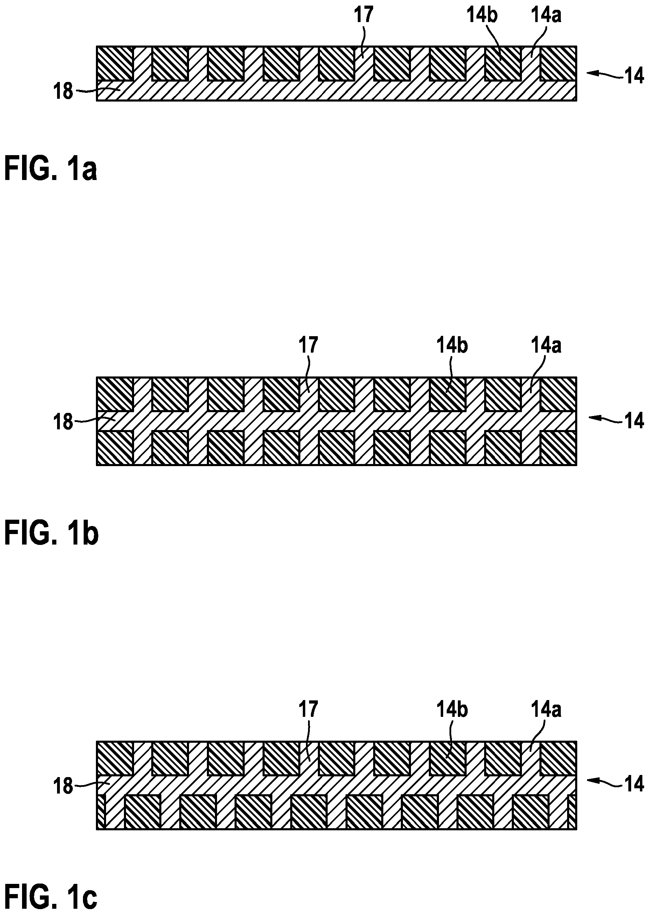

Die Fig. 1a zeigt eine Querschnittsansicht einer Schutzschicht der erfindungsgemäßen elektrochemischen Zelle gemäß einer Ausführungsform der Erfindung.

Eine Schutzschicht 14 einer (in Fig. 1a nicht gezeigten) elektrochemischen Zelle weist gemäß der vorliegenden Ausführungsform einen ersten Werkstoff 14a und einen zweiten Werkstoff 14b auf. Der erste Werkstoff 14a ist durch ein lithiumionenleitendes Material und der zweite Werkstoff 14b durch ein Polymer ausgebildet. Das lithiumionenleitende Material 14a weist eine gitterförmige Struktur auf, mit einer Mehrzahl von zur (in Fig. 1a nicht gezeigten) negativen Elektrode im Wesentlichen senkrecht angeordneten Komponenten 17 und einer zur (in Fig. 1a nicht gezeigten) negativen Elektrode im Wesentlichen parallel angeordneten Komponente 18. In dem lithiumionenleitenden Material 14a ausgebildete Zwischenräume sind mit Polymer 14b gefüllt.

Fig. 1b zeigt eine Querschnittsansicht einer Schutzschicht der erfindungsgemäßen elektrochemischen Zelle gemäß einer weiteren Ausführungsform der Erfindung.

Das lithiumionenleitende Material 14a ist gemäß der Ausführungsform von Fig. 1b derart angeordnet, dass eine zur (in Fig. 1b nicht gezeigten) negativen Elektrode im Wesentlichen parallel angeordneten Komponente vorgesehen ist. Des Weiteren sind eine Mehrzahl von zur (in Fig. 1b nicht gezeigten) negativen Elektrode im Wesentlichen senkrecht angeordneten Komponenten 17 vorgesehen, wobei sich die Mehrzahl von zur negativen Elektrode im Wesentlichen senkrecht angeordneten Komponenten 17 jeweils oberhalb und unterhalb der im Wesentlichen parallel zur negativen Elektrode angeordneten Komponente 18 erstrecken. Die in dem lithiumionenleitenden Material ausgebildeten Zwischenräume sind mit Polymer 14b gefüllt. Im Gegensatz zu der in Fig. 1a dargestellten Ausführungsform weist die in Fig. 1b gezeigte Schutzschicht 14 aufgrund des höheren Anteils an Polymer 14b eine höhere Flexibilität auf.

Fig. 1c zeigt eine Querschnittsansicht einer Schutzschicht der erfindungsgemäßen elektrochemischen Zelle gemäß einer weiteren Ausführungsform der Erfindung.

Die in Fig. 1c gezeigte Ausführungsform unterscheidet sich von der Ausführungsform gemäß Fig. 1b dadurch, dass die Mehrzahl von zur (in Fig. 1c nicht gezeigten) negativen Elektrode im Wesentlichen senkrecht angeordneten Komponenten 17 oberhalb und unterhalb der im Wesentlichen parallel zur negativen Elektrode angeordneten Komponente 18 versetzt zueinander angeordnet sind. Alternativ sind alle möglichen Zwischenstufen im Grad der Versetzung zwischen der Darstellung gemäß Fig. 1b und Fig. 1c denkbar.

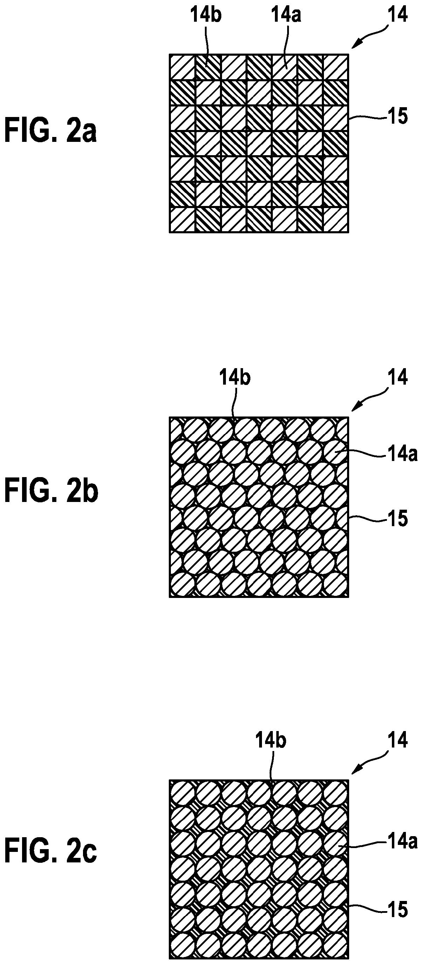

Fig. 2a zeigt eine Draufsicht der Schutzschicht der erfindungsgemäßen elektrochemischen Zelle gemäß einer Ausführungsform der Erfindung.

Die Schutzschicht 14, insbesondere in der Schutzschicht vorgesehene Leitpfade 15 weisen gemäß der Darstellung von Fig. 2a einen rechteckigen Querschnitt auf. Die Leitpfade können alternativ auch einen beliebigen anderen Querschnitt aufweisen. Je nach Mischverhältnis von Leitpfaden 15 und Polymeranteil in der Schutzschicht 14 ist somit die Flexibilität der Schutzschicht 14 variierbar. Je höher der Polymeranteil in der Schutzschicht 14 ist, desto höher ist deren Flexibilität. Das lithiumionenleitende Material und das Polymer sind in der Darstellung gemäß Fig. 2a in einer wiederholenden Anordnung in einem festen Muster angeordnet. Alternativ kann die Anordnung auch komplett ungeordnet und zufällig erfolgen. Die Leitpfade 15 weisen zu jeweils benachbart angeordneten Leitpfaden Kontakt auf. Alternativ können die Leitpfade auch derart angeordnet sein, dass diese zu ihren Nachbarn keinen Kontakt aufweisen. Eine Ausführung ohne Kontakt zwischen den Leitpfaden in Richtung senkrecht zur negativen Elektrode ist aufgrund der anzunehmenden bevorzugten Leitung in Richtung der Elektrode von Vorteil.

Fig. 2b zeigt eine Draufsicht der Schutzschicht der erfindungsgemäßen elektrochemischen Zelle gemäß einer weiteren Ausführungsform der Erfindung.

Die in Fig. 2b gezeigten Leitpfade 15 weisen einen runden Querschnitt auf. Die Leitpfade können alternativ auch einen beliebigen anderen Querschnitt aufweisen. Bei gleicher Dicke der Schutzschicht ist die lonenleitfähigkeit höher je höher der ionenleitfähige Anteil in der Schutzschicht, da die Kontaktfläche mit dem metallischen Lithium zunimmt. Diese Ausführungsform bietet somit eine hohe Lithiumionenleitfähigkeit und geringe Übergangswiderstände aufgrund des großen Anteils an Kontaktfläche Elektrolyt/Lithium-Ionen-Leiter im Kompositwerkstoff und Lithium-Ionen-Leiter im Kompositwerkstoff/Elektrode.

Fig. 2c zeigt eine Draufsicht der Schutzschicht der erfindungsgemäßen elektrochemischen Zelle gemäß einer weiteren Ausführungsform der Erfindung.

Die Leitpfade 15 weisen in der Darstellung der Fig. 2c ebenfalls einen runden Querschnitt auf. Die Leitpfade können alternativ auch einen beliebigen anderen Querschnitt aufweisen. Im Gegensatz zu der in Fig. 2b gezeigten Ausführungsform ist der Polymeranteil in der Ausführungsform gemäß Fig. 2c erhöht.

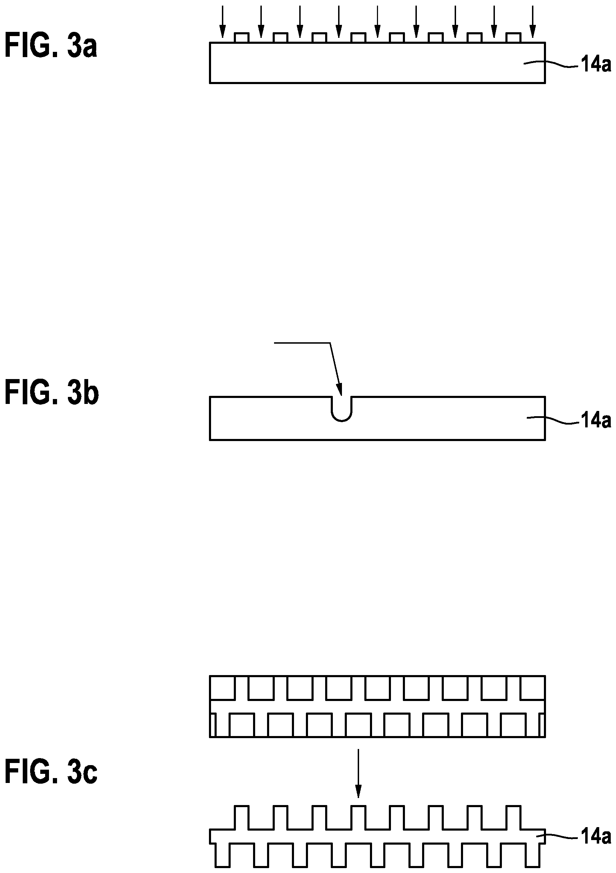

Fig. 3a zeigt ein Verfahren zum Herstellen einer elektrochemischen Zelle gemäß einer Ausführungsform der Erfindung.

Die Herstellung der Schutzschicht 14, insbesondere des lithiumionenleitenden Materials 14a, erfolgt gemäß der Ausführungsform von Fig. 3a durch chemisches Ätzen.

Fig. 3b zeigt ein Verfahren zum Herstellen einer elektrochemischen Zelle gemäß einer weiteren Ausführungsform der Erfindung.

Gemäß der Ausführungsform von Fig. 3b erfolgt die Herstellung des lithiumionenleitenden Materials 14a durch Laserablation.

Fig. 3c zeigt ein Verfahren zum Herstellen einer elektrochemischen Zelle gemäß einer weiteren Ausführungsform der Erfindung.

Die Herstellung des lithiumionenleitenden Materials 14a erfolgt gemäß der Darstellung von Fig. 3c durch Sintern. Nachdem die gewünschte Struktur hergestellt wurde, erfolgt die Einbettung des (in Fig. 3c nicht gezeigten) Polymers. Eine Möglichkeit ist das Füllen der entstandenen Zwischenräume mit einem Monomer und/oder Monomer-Initiator-Mischung und/oder Stoffen, wenn notwendig auch mit beigefügtem Initiator, die funktionalisierte Seitengruppen enthalten, die selbst polymerisieren können oder zum Crosslinken geeignet sind. Die Polymerisation wird anschließend durch einen Träger, wie UV-Strahlung, Temperatur u.Ä., initiiert. Die Monomer- und Oligomer-Einheiten können eine oder mehrere folgender polymerisierbaren funktionelle Gruppen enthalten, beispielsweise Hydroxy-, Epoxy-, Isocyanat, Isothiocyanat, Chlor- oder Halogensilane, eine oder mehrere C=C-Doppelbindungen und/oder Dreifachbindungen, entweder in den Seitenketten, endständig, im Oligomer-Backbone und/oder in einem Heterozyklus, Thiole, Acrylate, Anhydride, Laktone oder Laktame.

Neben der zuvor beschriebenen Einführung des anorganischen Polymers in den Kompositwerkstoff durch das Polymerisieren einer entsprechenden Chemikalienmischung in der vorgeformten lithiumionenleitenden Substruktur, ist es ebenfalls denkbar, ein fertiges Polymer durch Erhitzen über seinen Glaspunkt und/oder Schmelzpunkt in die Struktur zu pressen. Alternativ kann ein zuvor gegossenes Negativ zur in Fig. 3c dargestellten Struktur hergestellt und nachträglich in dieser integriert werden. Des Weiteren ist es denkbar, ein quellbares Polymer in die Struktur einzubetten. Durch die Einwirkung des (in Fig. 3c nicht gezeigten) Elektrolyten oder dessen Bestandteile und das sich ergebende Quellen kommt es sodann zu einer guten Kontaktfläche zwischen dem Polymer und dem in Fig. 3c dargestellten lithiumionenleitenden Material.

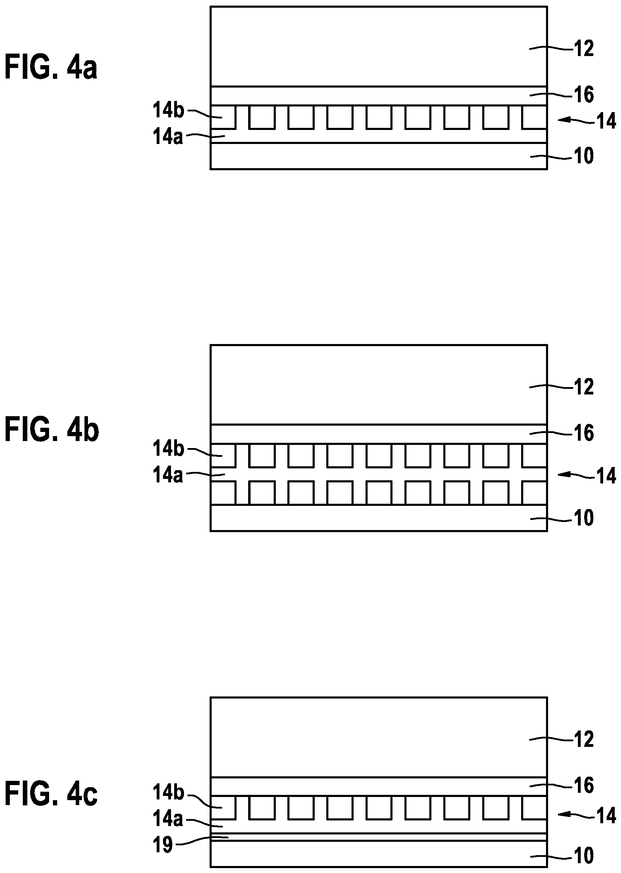

Fig. 4a zeigt eine schematische Ansicht einer elektrochemischen Zelle die nicht Teil der in der in den Ansprüchen definierten Erfindung ist.

Die in Fig. 4a dargestellte elektrochemische Zelle weist eine negative Elektrode 10, eine positive Elektrode 12, eine auf der negativen Elektrode 10 angeordnete Schutzschicht 14, welche die negative Elektrode 10 von der positiven Elektrode 12 trennt, sowie einen Elektrolyten 16 auf, wobei die negative Elektrode 10 zumindest teilweise metallisches Lithium aufweist. Die auf der negativen Elektrode 10 angeordnete Schutzschicht 14 besteht aus einem Kompositwerkstoff, aufweisend ein lithiumionenleitendes Material 14a und einen Polymer 14b. Die Schutzschicht 14 weist gemäß der Ausführungsform von Fig. 4a die in Fig. 1a dargestellte Struktur auf. Das lithiumionenleitende Material 14a ist hierbei aus sulfidischen Gläsern ausgebildet. Alternativ kann das lithiumionenleitende Material 14a ebenfalls aus oxidischen und Phosphat-basierten Gläsern und/oder Keramiken wie z.B. Li-haltige Granate oder LIPON ausgebildet sein. Das Polymer 14b ist aus PEO (Polyethylenoxid) ausgebildet.

Fig. 4b zeigt eine schematische Ansicht einer elektrochemischen Zelle, die nicht Teil der in der in den Ansprüchen definierten Erfindung ist.

Im Gegensatz zu der in Fig. 4a dargestellten Ausführungsform weist die in Fig. 4b dargestellte Ausführungsform die in Fig. 1b dargestellte Schutzschicht auf.

Fig. 4c zeigt eine schematische Ansicht einer elektrochemischen Zelle, die nicht Teil der in der in den Ansprüchen definierten Erfindung ist.

Gemäß der Ausführungsform von Fig. 4c ist zwischen der negativen Elektrode 10 und dem lithiumionenleitenden Material 14a der Schutzschicht 14 eine Zwischenschicht 19 angeordnet. Die Zwischenschicht 19 ist beispielsweise bei Vorsehen der lithiumionenleitenden Schicht aus z.B. LAGP oder bei manchen sulfidischen Gläsern sinnvoll, da diese in direktem Kontakt mit metallischen Elektroden, wie insbesondere Lithium, nicht stabil sind. Die Zwischenschicht 19 ist eine aufgedampfte Li-haltige Granat-Schicht oder eine andere lithiumstabile, leidende Schicht.

Fig. 4d zeigt eine schematische Ansicht einer elektrochemischen Zelle, die nicht Teil der in der in den Ansprüchen definierten Erfindung ist.

Die gemäß der Ausführungsform von Fig. 4d verwendete Schutzschicht 14 weist die in Fig. 1b dargestellte Struktur der Schutzschicht 14 auf. Zusätzlich ist, wie auch in Fig. 4c gezeigt, eine Zwischenschicht 19 zwischen der negativen Elektrode 10 und dem lithiumionenleitenden Material 14a der Schutzschicht 14 angeordnet.

Fig. 4e zeigt eine schematische Ansicht einer elektrochemischen Zelle, die nicht Teil der in der in den Ansprüchen definierten Erfindung ist.

Gemäß der Ausführungsform von Fig. 4e weist die Schutzschicht 14 eine Struktur auf, gemäß welcher zwei parallel zueinander sowie sich parallel zur negativen Elektrode 10 erstreckenden Komponenten vorgesehen sind. Vorstehend genannte sich parallel zur Elektrode 10 erstreckenden Komponenten des lithiumionenleitenden Materials 14a der Schutzschicht 14 sind durch eine Mehrzahl von sich im Wesentlichen senkrecht zur Elektrode 10 erstreckenden Komponenten verbunden. Zusätzlich ist zwischen der negativen Elektrode 10 und dem lithiumionenleitenden Material 14a der Schutzschicht 14 eine Zwischenschicht 19 angeordnet.

Fig. 4f zeigt eine schematische Ansicht einer elektrochemischen Zelle gemäß einer Ausführungsform der Erfindung.

Gemäß der Ausführungsform von Fig. 4f weist die verwendete Schutzschicht 14 die in Fig. 1a dargestellte Struktur auf. Zusätzlich ist zwischen der negativen Elektrode 10 und dem lithiumionenleitenden Material 14a der Schutzschicht 14 eine Zwischenschicht 19 angeordnet. Darüber hinaus ist zwischen der positiven Elektrode 12 und dem lithiumionenleitenden Material 14a der Schutzschicht 14 eine weitere Zwischenschicht 20 angeordnet. Die abgebildete Zwischenschicht 19 bzw. 20 dient einem besseren Kontakt zwischen dem lithiumionenleitenden Material 14a und der jeweiligen Elektrode. Der durch die zusätzliche Grenzfläche hervorgerufene Effekt eines potenziell erhöhten Innenwiderstandes wird durch die bessere Kontaktierung kompensiert.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise kann die gitterförmige Struktur des lithiumionenleitenden Materials 14a in beliebiger Form angeordnet sein. Des Weiteren ist das Vorsehen einer Zwischenschicht zwischen der negativen Elektrode 10 und dem lithiumionenleitenden Material 14a der Schutzschicht 14 bzw. zwischen der positiven Elektrode 12 und dem lithiumionenleitenden Material 14a der Schutzschicht 14 optional. Die Schutzschicht 14 kann überdies die Funktion eines Separators aufweisen.

## Patentansprüche

1. Elektrochemische Zelle, aufweisend eine negative Elektrode (10), eine positive Elektrode (12), eine auf der negativen Elektrode (10) angeordnete Schutzschicht (14), welche die negative Elektrode (10) von der positiven Elektrode (12) trennt, sowie einen Elektrolyten (16), der zwischen der positiven Elektrode (12) und der Schutzschicht (14) angeordnet ist,
wobei die negative Elektrode (10) zumindest teilweise metallisches Lithium aufweist, und wobei die auf der negativen Elektrode (10) angeordnete Schutzschicht (14) aus einem Kompositwerkstoff, aufweisend zumindest einen ersten Werkstoff (14a), welcher durch ein lithiumionenleitendes Material ausgebildet ist, und einen zweiten Werkstoff (14b), welcher durch ein Polymer ausgebildet ist, ausgebildet ist, und wobei die Schutzschicht (14) Leitpfade (15) aufweist, welche durch Material-Kanäle des lithiumionenleitenden Materials ausgebildet sind, wobei die Leitpfade (15) in Hochrichtung der Schutzschicht (14) durchgehend ausgebildet sind, wobei das
lithiumionenleitende Material eine gitterförmige Struktur aufweist, mit einer Mehrzahl von zur negativen Elektrode (10) im Wesentlichen senkrecht angeordneten Komponenten (17), die von einer parallel angeordneten Schicht aus dem gleichen Material verbunden sind, wobei in dem lithiumionenleitenden Material ausgebildete Zwischenräume mit Polymer gefüllt sind,
**dadurch gekennzeichnet, dass**
zwischen dem Elektrolyten (16) und der Schutzschicht (14) eine Zwischenschicht (20) angeordnet ist.

2. Elektrochemische Zelle nach Anspruch 1, wobei die Leitpfade (15) jeweils einen rechteckigen oder runden Querschnitt aufweisen.

3. Verfahren zum Herstellen einer elektrochemischen Zelle nach Anspruch 1 folgenden Schritten:
Abtragen von Material des ersten Werkstoffes (14a);
Füllen des zweiten Werkstoffes (14b) in, in dem ersten Werkstoff (14a) ausgebildete Zwischenräume zum Ausbilden der Schutzschicht (14); und
Anordnen der Schutzschicht (14) auf der negativen Elektrode (10) der elektrochemischen Zelle.

4. Verfahren nach Anspruch 3, wobei das lithiumionenleitende Material durch chemisches Ätzen, Laserablation oder lonenstrahlätzen abgetragen wird.

5. Verfahren nach Anspruch 3 oder 4, wobei die in dem ersten Werkstoff (14a) ausgebildeten Zwischenräume mit einem Monomer und/oder einer Monomer-Initiator Mischung und/oder einem Oligomer und/oder einer Oligomer-Initiator Mischung gefüllt werden, die polymerisierfähig sind, oder die Monomere und/oder die Oligomere funktionalisierte Seitengruppen aufweisen, und/oder einem Polymer das in die Zwischenräume eingeschmolzen wird.

6. Verfahren nach Anspruch 4 oder 5, wobei das lithiumionenleitende Material der Schutzschicht (14) aus sulfidischen, oxidischen oder phosphat-basierten Gläsern und/oder Keramiken ausgebildet ist.

## Claims

1. Electrochemical cell comprising a negative electrode (10), a positive electrode (12), a protective layer (14) which is arranged on the negative electrode (10) and separates the negative electrode (10) from the positive electrode (12) and also an electrolyte (16) which is arranged between the positive electrode (12) and the protective layer (14),
where the negative electrode (10) at least partially comprises metallic lithium and the protective layer (14) arranged on the negative electrode (10) is formed by a composite material comprising at least a first material (14a) which is formed by a lithium ion-conducting material and a second material (14b) which is formed by a polymer, and the protective layer (14) has conducting paths (15) which are formed by material channels of the lithium ion-conducting material, where the conducting paths (15) are continuous in the height direction of the protective layer (14), where the lithium ion-conducting material has a grid-like structure having a plurality of components (17) which are arranged essentially perpendicular to the negative electrode (10) and are joined by a parallel layer composed of the same material, where interstices formed in the lithium ion-conducting material are filled with polymer,
**characterized in that** an intermediate layer (20) is arranged between the electrolyte (16) and the protective layer (14).

2. Electrochemical cell according to Claim 1, wherein the conducting paths (15) each have a rectangular or round cross section.

3. Process for producing an electrochemical cell according to Claim 1, comprising the following steps:
removal of material from the first material (14a);
filling of the second material (14b) into interstices formed in the first material (14a) to form the protective layer (14); and
arrangement of the protective layer (14) on the negative electrode (10) of the electrochemical cell.

4. Process according to Claim 3, wherein the lithium ion-conducting material is removed by chemical etching, laser ablation or ion beam etching.

5. Process according to Claim 3 or 4, wherein the interstices formed in the first material (14a) are filled with a monomer and/or a monomer/initiator mixture and/or an oligomer and/or an oligomer/initiator mixture, which are in each case polymerizable or the monomers and/or the oligomers have functional side groups, and/or with a polymer is melted into the interstices.

6. Process according to Claim 4 or 5, wherein the lithium ion-conducting material of the protective layer (14) is formed by sulfidic, oxidic or phosphate-based glasses and/or ceramics.

## Revendications

1. Cellule électrochimique, présentant une électrode négative (10), une électrode positive (12), une couche de protection (14) disposée sur l'électrode négative (10) qui sépare l'électrode négative (10) de l'électrode positive (12), ainsi qu'un électrolyte (16) qui est disposé entre l'électrode positive (12) et la couche de protection (14),
l'électrode négative (10) présentant du lithium au moins en partie métallique, et la couche de protection (14) disposée sur l'électrode négative (10) étant réalisée à partir d'un matériau composite présentant au moins un premier matériau (14a), qui est réalisé par une matière conductrice d'ions de lithium, et un deuxième matériau (14b) qui est réalisé par un polymère, et la couche de protection (14) présentant des pistes conductrices (15) qui sont réalisées par des canaux de matière de la matière conductrice d'ions de lithium, les pistes conductrices (15) étant réalisées de manière traversante dans la direction verticale de la couche de protection (14), la matière conductrice d'ions de lithium présentant une structure en treillis comprenant une pluralité de composants (17) disposés de manière substantiellement perpendiculaire à l'électrode négative (10) et qui sont reliés à partir d'une couche de la même matière, disposée en parallèle, les intervalles réalisés dans la matière conductrice d'ions de lithium étant remplis avec un polymère,
**caractérisée en ce qu'**une couche intermédiaire (20) est disposée entre l'électrolyte (16) et la couche de protection (14).

2. Cellule électrochimique selon la revendication 1, dans laquelle les pistes conductrices (15) présentent respectivement une section transversale rectangulaire ou ronde.

3. Procédé de fabrication d'une cellule électrochimique selon la revendication 1, comprenant les étapes suivantes consistant à :
enlever de la matière du premier matériau (14a) ;
verser le deuxième matériau (14b) dans des intervalles réalisés dans le premier matériau (14a) pour réaliser la couche de protection (14) ; et
disposer la couche de protection (14) sur l'électrode négative (10) de la cellule électrochimique.

4. Procédé selon la revendication 3, dans lequel la matière conductrice d'ions de lithium est enlevée par gravure chimique, par ablation laser ou par attaque par faisceau d'ions.

5. Procédé selon la revendication 3 ou 4, dans lequel les intervalles réalisés dans le premier matériau (14a) sont remplis avec un monomère et/ou un mélange initiateur de monomères et/ou un oligomère et/ou un mélange initiateur d'oligomères, qui sont polymérisables, ou les monomères et/ou les oligomères présentent des groupes pendants fonctionnalisés, et/ou avec un polymère qui est fondu dans les intervalles.

6. Procédé selon la revendication 4 ou 5, dans lequel la matière conductrice d'ions de lithium de la couche de protection (14) est réalisée à partir de verres et/ou céramiques sulfurés, à base d'oxyde ou de phosphate.
